# EUROPÄISCHE PATENTSCHRIFT

(11) **EP 0 363 653 B1**
(45) Veröffentlichungstag und Bekanntmachung des Hinweises auf die Patenterteilung: **18.05.1994**
(21) Anmeldenummer: 89116642.3
(22) Anmeldetag: 08.09.1989
(51) Int. Cl.: G11B 27/28, G11B 27/34, G11B 27/13, G11B 15/02, G11B 27/32

(54) **Verfahren zur Aufzeichnung und Wiedergabe des Inhaltsverzeichnisses einer Videomagnetbandkassette und Videorecorder zur Durchführung des Verfahrens**
Method for recording and reproducing the table of contents of a magnetic-tape video cassette, and video recorder for carrying out the method
Méthode d'enregistrement et de reproduction de table de matières d'une cassette à bande magnétique vidéo et magnétoscope pour la mise en oeuvre de cette méthode

(30) Priorität: 11.10.1988 DE 3834510
(43) Veröffentlichungstag der Anmeldung: 18.04.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Kornhaas, Wolfgang c/o GRUNDIG E.M.V. Max Grundig, D-8510 Fürth/Bay. (DE)

(56) Entgegenhaltungen:
- EP-A- 0 029 946
- EP-A- 0 248 945
- EP-A- 0 257 534
- EP-A- 0 280 217
- EP-A- 0 320 744
- WO-A-84/02221
- BE-A- 886 928
- DE-A- 3 621 263
- GB-A- 2 047 432
- PATENT ABSTRACTS OF JAPAN vol. 12, no. 8 (P-654)(2855) 12 Januar 1988,& JP-A-62 167691
- MC. no. 3, 1981, MUNCHEN DE Seiten 52 - 57; Thilo: "Datenspeicherung mitVideorecorder"
- IEEE TRANSACTIONS ON CONSUMER ELECTRONICS. vol. CE-33, no. 3, August 1987, New York, US; Seiten 220-224; NISHIMOTO et al.: "VHS VCR Index and Address Search Sytems"
- PATENT ABSTRACTS OF JAPAN vol. 11, no. 178 (P-584)(2625) 09 Juni 1987,& JP-A-62 008389
- PATENT ABSTRACTS OF JAPAN vol. 11, no. 261 (P-609)(2708) 25 August 1987,& JP-A-62 066493

## Beschreibung

Die Erfindung betrifft ein Verfahren zur Aufzeichnung des Inhaltsverzeichnisses einer Videomagnetbandkassette und ein Verfahren zur Wiedergabe des Inhaltsverzeichnisses einer Videomagnetbandkassette. Weiterhin betrifft die Erfindung einen Videorecorder zur Durchführung des Verfahrens zur Aufzeichnung bzw. Wiedergabe des Inhaltsverzeichnisses einer Videomagnetbandkassette.

Aus der DE-PS 30 12 134 ist bereits ein Verfahren bekannt, bei dem während der Aufzeichnung die Anfangsbandstände aller auf einer Kassette aufgezeichneten Videosignalabschnitte in einem Speicher des Videorecorders abgelegt und beim Ausschalten des Gerätes in der Tonspur am Bandanfang aufgezeichnet werden.

Aus der EP-OS 0 029 946 ist ein weiteres Verfahren und eine nach diesem Verfahren arbeitende Einrichtung bekannt, bei dem nach Beendigung des Aufzeichnungsvorgangs am Bandanfang Ortsinformationen der auf dem Band vorhandenen Aufzeichnungen aufgezeichnet werden.

Aus der DE-OS 36 21 263 ist es bekannt, zwischen den einzelnen auf einem Videomagnetband aufgezeichneten Sendungen in den Videospuren des Bandes die Positionsdaten und Titel aller vorher auf dem Band aufgezeichneten Sendungen aufzuzeichnen und bei Bedarf über einen Zwischenspeicher im Videorecorder auf dem Bildschirm darzustellen. Die Eingabe des Titels einer aufzuzeichnenden Sendung kann mittels der Bedientastatur erfolgen. Der Titel kann aber auch aus einer vom Sender gelieferten Videotextseite entnommen werden.

Aus dem Artikel "Datenspeicherung mit Videorecorder" von I. Thilo, erschienen in mc-hard, 3/1981, Seiten 52 - 57, ist ein Videorecorder bekannt, bei dem ein Inhaltsverzeichnis am Bandanfang aufgezeichnet wird. Zur besseren Bandausnutzung werden die Daten des Inhaltsverzeichnisses in den Schrägspuren aufgezeichnet.

Aus der EP-A-0 257 534 der Anmelderin ist es bekannt, einen Videorecorder mit einem Halbleiterspeicher auszurüsten, in dem die Aufzeichnungsdaten einer Vielzahl von Videokassetten abspeicherbar sind.

Weiterhin ist es aus der DE-OS 36 23 756 bekannt, das Tastverhältnis der in der Steuerspur aufgezeichneten Steuerspurimpulse zur Aufzeichnung des Titels einer Sendung zu modifizieren.

Weitere Informationen zur Aufzeichnung von Daten in der Steuerspur mittels Änderung des Tastverhältnisses der Steuerimpulse können dem Artikel "VHS WITH INDEX AND ADDRESS SEARCH SYSTEMS" von N. Nishimoto et al, erschienen in IEEE Transactions on Consumer Electronics CE-33 (1987) August, No. 3, entnommen werden.

Die Aufgabe der Erfindung besteht darin, ein Verfahren zur Aufzeichnung des Inhaltverzeichnisses einer Videomagnetbandkassette anzugeben, welches die Voraussetzungen dafür schafft, daß der Benutzer nach dem Einlegen einer bespielten Videomagnetbandkassette in einen Videorecorder unabhängig von der momentanen Bandposition nahezu verzögerungsfrei Informationen über den Inhalt der Videomagnetbandkassette erhalten kann.

Diese Aufgabe wird durch ein Verfahren mit den im Patentanspruch 1 angegebenen Merkmalen gelöst. Vorteilhafte Weiterbildungen dieses Verfahrens sind

Gegenstand der Ansprüche 2-4. Im Anspruch 5 ist ein Verfahren zur Wiedergabe des Inhaltsverzeichnisses einer Videomagnetbandkassette angegeben. Die Ansprüche 6-13 betreffen Videorecorder zur Durchführung der vorgenannten Verfahren.

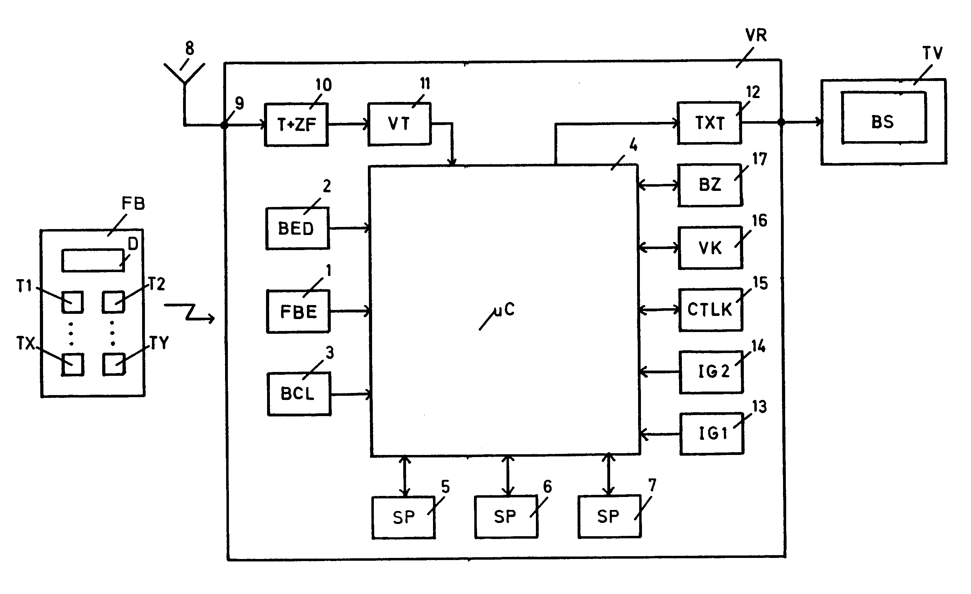

Die Vorteile der Erfindung bestehen insbesondere darin, daß der Benutzer nach dem Einlegen einer bespielten Videokassette in den Videorecorder nahezu verzögerungsfrei Informationen über den Inhalt der Kassette beispielsweise auf dem Bildschirm eines an den Videorecorder angeschlossenen Fernsehempfängers erhält. Handelt es sich bei der eingelegten Kassette um eine zurückgespulte Kassette, dann werden die genannten Informationen entweder den Videoschrägspuren oder der Steuerspur am Bandanfang entnommen und in Form eines Inbaltsverzeichnisses des gesamten Kassette am Bildschirm dargestellt. Ist die eingelegte Kassette hingegen nicht zurückgespult, dann werden die genannten Informationen der Steuerspur entnommen und entweder in Form von Bandstand des Anfangs und Titel der momentanen Aufzeichnung oder in Form von Bandstand der Anfänge und Titel der momentanen und aller vorherigen Aufzeichnungen auf demselben Band am Bildschirm dargestellt. Weitere Vorteile ergeben sich aus der Erläuterung eines Ausführungsbeispiels anhand der Figur.

Die Figur zeigt einen an eine Antenne 8 oder eine Kabelübertragungsstrecke angeschlossenen Videorecorder VR mit einem Fernbedienungsgeber FB und einen an den Videorecorder angeschlossenen Fernsehempfänger TV mit einem Bildschirm BS.

Der Fernbedienungsgeber FB enthält ein Display D sowie Ziffern- und Funktionstasten T1, T2, ..., TX, TY.

Der Videorecorder VR enthält einen Fernbedienungsempfänger 1, eine Nahbedienung 2, einen Barcode-Leser 3, einen Mikrocomputer 4, einen Programmierspeicher 5, einen Archivspeicher 6, einen Arbeitsspeicher 7, einen Tuner und ZF-Verstärker 10, einen Videotextdecoder 11, einen Textbaustein 12, einen ersten Impulsgeber 13, einen zweiten Impulsgeber 14, einen Steuerspurmagnetkopf 15, Videoaufzeichnungs- und -wiedergabeköpfe 16 und einen Bandzähler 17.

Im folgenden wird die Funktionsweise der gezeigten Anordnung bei der Aufzeichnung einer Sendung beispielhaft erläutert:
Unmittelbar nach dem Einlegen einer Videokassette in den Videorecorder aktiviert der Mikrocomputer 4 den (nicht gezeichneten) Bandantriebsmotor zur Durchführung eines Initialisierungslaufes. Bei diesem Initialisierungslauf wird das Band kurzzeitig mit erhöhter Geschwindigkeit zurück- und vorgespult. Während dieses Umspulvorganges werden von den Wellen der beiden Bandwickel oder von der Welle eines Bandwickels und der Capstan-Welle mittels der Impulsgeber 13 und 14 Impulse abgeleitet, deren Anzahl pro Zeiteinheit von der Drehgeschwindigkeit der zugehörigen Welle abhängt, und dem Mikrocomputer 4 zugeführt. Dieser errechnet unter Verwendung der genannten Impulse und unter Verwendung von im Videorecorder abgespeicherten Bandkonstanten die momentane Bandposition und legt den ermittelten Wert in einem Arbeitsspeicher 7 ab.

Anschließend folgt die Zwischenspeicherung des Titels der aufzuzeichnenden Sendung. Die Eingabe des Titels kann auf zwei Wegen geschehen. Ein erster Weg ist die manuelle Eingabe des Titels unter Verwendung der Tastatur T1, T2, ..., TX, TY des Fernbedienungsgebers FB oder unter Verwendung der Nahbedienung 2. Die zweite Möglichkeit der Titeleingabe besteht darin, den Videorecorder nach dem sog. VPV-Verfahren zu programmieren und dabei den Titel der aufzuzeichnenden Sendung aus dem Videotextsignal abzutrennen. Hierzu wird das empfangene Signal über den Eingang 9 des Videorecorders VR und einen Tuner und eine ZF-Stufe 10 einem Videotextdecoder 11 zugeführt, an dessen Ausgang neben den für die automatische Aufzeichnung notwendigen Sendungsdaten auch der Titel zur Verfügung gestellt wird. Der auf einem der vorgenannten Wege eingegebene Titel wird in einem Speicher 5 zwischengespeichert.

Am Beginn der aufzuzeichnenden Sendung wird der Aufzeichnungsvorgang gestartet. Bei diesem Aufzeichnungsvorgang werden auf grundsätzlich bekannte Weise mittels der Videoköpfe 16 die Videosignale in den Schrägspuren des Videomagnetbandes aufgezeichnet. Ferner werden die mittels des Steuerspurmagnetkopfes 15 in der Steuerspur aufzuzeichnenden Steuerspurimpulse zur Aufzeichnung des Bandstandes des Anfangs der aufzuzeichnenden Sendung und des Titels impulsbreitenmoduliert aufgezeichnet.

Während dieses Aufzeichnungsvorganges liefert ein Bandzähler 17 ständig Informationen über den aktuellen Bandstand an den Mikrocomputer 4. Damit steht auch bei der Beendigung des Aufzeichnungsvorganges der Bandstand zur Verfügung. Dieser wird zusammen mit dem Bandstand des Anfangs der Sendung und dem Titel der Sendung im Speicher 7 zwischengespeichert.

Wird nun nach getätigter Aufzeichnung der Videorecorder entweder aus- oder in den Bereitschaftsbetrieb umgeschaltet, so initiiert der Mikrocomputer 4 vor der Aus- bzw. Umschaltung automatisch einen Rückspulvorgang zum Bandanfang, um dort entweder mittels der Videoköpfe 16 in den Videoschrägspuren oder mittels des Steuerspurmagnetkopfes 15 in der Steuerspur den Bandstand von Anfang und Ende der Sendung sowie den Titel aufzuzeichnen. Eine Aufzeichnung in den Videoschrägspuren hat den Vorteil, daß der Bandverbrauch zur Aufzeichnung des Inhaltsverzeichnisses am Bandanfang gering ist. Eine Aufzeichnung in der Steuerspur bietet den Vorteil der schaltungstechnisch einfacheren und kostengünstigeren Wiedergabe des Inhaltsverzeichnisses.

Wird das vorstehend beschriebene Verfahren bei jedem Aufzeichnungsvorgang durchgeführt, so erhält man am Bandanfang entweder in den Videoschrägspuren oder in der Steuerspur ein komplettes Inhaltsverzeichnis der Bandstände von Anfang und Ende jeder auf dem Band aufgezeichneten Sendung samt zugehörigem Titel. Ferner liegt in der Steuerspur des Bandes bei jeder aufgezeichneten Sendung eine Information über den Bandstand des Anfangs der Sendung und über den Titel der Sendung.

Eine vorteilhafte Weiterbildung der Erfindung besteht darin, den oben beschriebenen Initialisierungslauf nicht nur zur Ermittlung des momentanen Bandstandes, sondern auch zum Wiedergeben von bereits in der Steuerspur des Bandes aufgezeichneten impulsbreitenmodulierten Steuerspurimpulsen zu verwenden. Hierzu muß lediglich beim Umspulvorgang der Steuerspurmagnetkopf 15 am Band anliegen. Bei diesem Wiedergabevorgang wird der Anfangsbandstand und der Titel einer bereits auf dem Band aufgezeichneten Sendung gelesen und im Arbeitsspeicher 7 zwischengespeichert. Wird nun bei der Durchführung einer Folgeaufzeichnung nicht nur der Anfangsbandstand und der Titel der Folgeaufzeichnung, sondern zusätzlich der Anfangsbandstand und der Titel aus dem Arbeitsspeicher 7 in der Steuerspur des Bandes aufgezeichnet und dieses Vorgehen auch bei allen weiteren Folgeaufzeichnungen verwendet, dann sind in der Steuerspur Informationen über die Anfangsbandstände und die Titel aller bis zur aktuellen Bandstelle auf dem Band aufgezeichneten Sendungen aufgezeichnet.

Im folgenden wird die Funktionsweise der gezeigten Anordnung bei der Wiedergabe beispielhaft erläutert: Unmittelbar nach dem Einlegen einer Videokassette in den Videorecorder aktiviert der Mikrocomputer 4 den (nicht gezeichneten) Bandantriebsmotor zur Durchführung eines Initialisierungslaufes. Dieser läuft ebenso ab wie er oben aufzeichnungsseitig beschrieben wurde. Der ermittelte Bandstand wird auch hier im Arbeitsspeicher 7 abgelegt.

Anschließend vergleicht der Mikrocomputer 4 den ermittelten Bandstand mit einem vorgegebenen Schwellwert um zu ermitteln, ob die momentane Bandposition der Bandanfang ist oder nicht.

Ist die momentane Bandposition der Bandanfang, dann aktiviert der Mikrocomputer 4 - je nachdem, ob das am Bandanfang aufgezeichnete Inhaltsverzeichnis in den Videoschrägspuren oder in der Steuerspur aufgezeichnet ist - entweder die Videoköpfe 16 oder den Steuerspurmagnetkopf 15 zur Wiedergabe des am Bandanfang aufgezeichneten Inhaltsverzeichnisses.

Ist die momentane Bandposition nicht der Bandanfang, dann aktiviert der Mikrocomputer 4 den Steuerspurmagnetkopf 15 zur Wiedergabe des in der Steuerspur aufgezeichneten Inhaltsverzeichnisses.

Das wiedergegebene Inhaltsverzeichnis wird im Arbeitsspeicher 7 des Videorecorders zwischengespeichert und entweder automatisch oder nach Eingabe eines Befehls mittels des Fernbedienungsgebers FB bzw. der Nahbedienung 2 über den Textbaustein 12 auf dem Bildschirm BS des an den Videorecorder VR angeschlossenen Fernsehempfängers TV dargestellt.

Der Vorteil dieses Verfahrens besteht im wesentlichen darin, daß der Benutzer nach dem Einlegen einer bespielten Videokassette, deren Inhalt er nicht kennt, bereits nach kurzer Zeit Informationen über den Inhalt der Kassette im Klartext auf dem Bildschirm bekommt.

Eine vorteilhafte Weiterbildung der Erfindung besteht darin, den Videorecorder mit einem Archivspeicher 6 auszurüsten, in dem die Inhaltsverzeichnisse einer Vielzahl von Videomagnetbandkassetten abspeicherbar sind. Wird nun jeder einzelnen Videomagnetbandkassette aufzeichnungsseitig entweder mittels der Zifferntasten des Fernbedienungsgebers FB oder der Nahbedienung 2 oder unter Verwendung eines Barcode-Aufklebers eine laufende Nummer zugeordnet, so wählt der Mikrocomputer 4 zur Abspeicherung der Anfangsbandstände und Titel aller Sendungen der Videomagnetbandkassette einen bestimmten Speicherbereich des Archivspeichers 6 an. Kann nun beim oder nach dem Einlegen einer Kassette zur Wiedergabe die Kassette im Hinblick auf die Zuordnung zu einem bestimmten Speicherbereich des Speichers 6 identifiziert werden, was entweder durch den Benutzer durch Eingabe der laufenden Nummer der Kassette oder durch Abtastung des Barcode-Aufklebers der Kassette mittels des Barcode-Lesers 3 geschehen kann, so kann sofort das im Archivspeicher 6 abgespeicherte Inhaltsverzeichnis über den Textbaustein 12 auf dem Bildschirm BS dargestellt werden.

## Patentansprüche

1. Verfahren zur Aufzeichnung des Inhaltsverzeichnisses einer Videomagnetbandkassette mit folgenden Verfahrensschritten:
- Durchführung eines Initialisierungslaufes zur Ermittlung der momentanen Bandposition,
- Zwischenspeicherung der momentanen Bandposition,
- Zwischenspeicherung des Titels eines aufzuzeichnenden Videosignalabschnittes,
- Durchführung des Aufzeichnungsvorganges,
- Ermittlung des dem Ende des Videosignalabschnittes entsprechenden Bandstandes, und
- gemeinsame Aufzeichnung der Bandstände von Anfang und Ende des Videosignalabschnittes zusammen mit dem Titel des Videosignalabschnittes am Bandanfang,
**dadurch gekennzeichnet**,
daß bei der Durchführung des Aufzeichnungsvorgangs der dem Anfang des Videosignalabschnittes entsprechende Bandstand zusammen mit dem Titel des Videosignalabschnittes in der Steuerspur des Videomagnetbandes mittels Impulsbreitenmodulation der Steuerspurimpulse aufgezeichnet wird.

2. Verfahren nach Anspruch 1 mit einer gemeinsamen Aufzeichnung der Bandstände von Anfang und Ende des Videosignalabschnittes zusammen mit dem Titel des Videosignalabschnittes am Bandanfang in den Videoschrägspuren.

3. Verfahren nach Anspruch 1 mit einer gemeinsamen Aufzeichnung der Bandstände von Anfang und Ende des Videosignalabschnittes zusammen mit dem Titel des Videosignalabschnittes am Bandanfang in der Steuerspur.

4. Verfahren nach einem oder mehreren der Ansprüche 1 - 3 mit einer Aufzeichnung des dem Anfang des Videosignalabschnittes entsprechenden Bandstandes zusammen mit dem Titel des Videosignalabschnittes und zusammen mit den den Anfängen aller vorherigen Videosignalabschnitte entsprechenden Bandständen und deren Titel in der Steuerspur des Videomagnetbandes mittels Impulsbreitenmodulation der Steuerspurimpulse.

5. Verfahren zur Wiedergabe des Inhaltsverzeichnisses einer Videomagnetbandkassette, welches gemäß dem Verfahren nach einem oder mehreren der Ansprüche 1 - 4 aufgezeichnet wurde, mit folgenden Verfahrensschritten:
- Durchführung eines Initialisierungslaufes zur Ermittlung der momentanen Bandposition,
- bei einer dem Bandanfang entsprechenden Bandposition Wiedergabe und Zwischenspeicherung des am Bandanfang aufgezeichneten Inhaltsverzeichnisses, und
- Darstellung des zwischegespeicherten Inhaltverzeichnisses im Klartext auf einer Anzeige,
**dadurch gekennzeichnet**,
daß bei einer nicht dem Bandanfang entsprechenden Bandposition die Wiedergabe und Zwischenspeicherung des in der Steuerspur aufgezeichneten Inhaltsverzeichnisses erfolgt.

6. Videorecorder zur Durchführung des Verfahrens nach einem oder mehreren den Ansprüchen 1 - 4, mit
- einem ersten Impulsgeber (13) zur Lieferung von Impulsen von einer ersten mit dem Bandantrieb in Verbindung stehenden Welle,
- einen zweiten Impulsgeber (14) zur Lieferung von Impulsen von einer zweiten mit dem Bandantrieb in Verbindung stehenden Welle,
- einer Rechenschaltung (4) zur Ermittlung der momentanen Bandposition unter Verwendung der von den beiden Impulsgebern gelieferten Impulse,
- Speichermitteln (5, 7) zur Zwischenspeicherung des momentanen Bandstandes und des Titels des aufzuzeichnenden Videosignalabschnittes,
- einem Steuerspurmagnetkopf (15) zur Aufzeichnung von impulsbreitenmodulierten Steuerspurimpulsen,
- einem Bandzähler (17), und
- einer Steuerschaltung (4), die nach dem Ende der Aufzeichnung des Videosignalabschnittes einen Rückspulvorgang auslöst und die gemeinsame Aufzeichnung der Bandstände von Anfang und Ende des Videosignalabschnittes zusammen mit dem Titel des Videosignalabschnittes am Bandanfang initiiert,
**dadurch gekennzeichnet**,
daß bei der Aufzeichnung die mittels des Steuerspurmagnetkopfs (15) in der Steuerspur aufgezeichneten Steuerimpulse nach Maßgabe des Inhalts der Speichermittel (5, 7) impulsbreitenmoduliert werden.

7. Videorecorder nach Anspruch 6 mit einer Bedieneinheit (FB, 2) zur manuellen Eingabe des Titels eines aufzuzeichnenden Videosignalabschnittes.

8. Videorecorder nach Anspruch 6 oder 7 mit einer Schaltung (11) zur Abtrennung der den Titel kennzeichnenden Daten eines aufzuzeichnenden Videosignalabschnittes aus einer vom Fernsehsender gelieferten Videotextseite.

9. Videorecorder nach einem oder mehreren der Ansprüche 6 - 8 mit
- weiteren Speichermitteln (6) zur Abspeicherung der Inhaltsverzeichnisse einer Vielzahl von Videomagnetbandkassetten.

10. Videorecorder zur Durchführung des Verfahrens nach Anspruch 5, mit
- einem ersten Impulsgeber (13) zur Lieferung von Impulsen von einer ersten mit dem Bandantrieb in Verbindung stehenden Welle,
- einem zweiten Impulsgeber (14) zur Lieferung von Impulsen von einer zweiten mit dem Bandantrieb in Verbindung stehenden Welle,
- einer Rechenschaltung (4) zur Ermittlung der momentanen Bandposition unter Verwendung der von den beiden Impulsgebern gelieferten Impulse,
- einer Steuerschaltung (4), die dann, wenn die ermittelte Bandposition der Bandanfang ist, die Wiedergabe des am Bandanfang aufgezeichneten Inhaltsverzeichnisses initiiert,
- einer ersten Speichereinheit (7) zur Zwischenspeicherung des wiedergegebenen Inhaltsverzeichnisses, und
- einem Textgenerator (12), an dessem Ausgang das darzustellende Inhaltsverzeichnis zur Verfügung gestellt wird,
**dadurch gekennzeichnet**,
daß, wenn die ermittelte Bandposition nicht der Bandanfang ist, die Steuerschaltung (4) die Wiedergabe des in der Steuerspur aufgezeichneten Inhaltsverzeichnisses initiiert.

11. Videorecorder nach Anspruch 10, mit
- einer zweiten Speichereinheit (6) zur Abspeicherung der Inhaltsverzeichnisse einer Vielzahl von Videomagnetbandkassetten,
- Mittel (FB, 2, 3, 4) zur Identifizierung einer Videomagnetbandkassette im Hinblick auf eine Zuordnung der Videomagnetbandkassette zu einem bestimmten Speicherbereich der zweiten Speichereinheit (6), und
- einer Schaltung (4), die nach einer erfolgten Identifizierung der Videomagnetbandkassette die zweite Speichereinheit (6) derart adressiert, daß das der identifizierten Kassette zugehörige Inhaltsverzeichnis dem Textgenerator (12) zugeführt wird.

12. Videorecorder nach Anspruch 10 oder 11, mit
- einer Steuerschaltung (4), die nach dem Einlegen einer Videomagnetbandkassette die automatische Darstellung des Inhaltsverzeichnisses auf dem Bildschirm einleitet.

13. Videorecorder nach Anspruch 10 oder 11, mit
- einer Steuerschaltung (4), die die Darstellung des Inhaltsverzeichnisses auf dem Bildschirm (BS) in Ansprache auf einen mittels der Bedieneinheit (FB, 2) eingegebenen Befehl einleitet.

## Claims

1. Method for recording the list of contents of a magnetic video tape cassette, comprising the following method steps:
- performance of an initialization run for determining the current tape position,
- temporary storage of the current tape position,
- temporary storage of the title of a video signal section to be recorded,
- performance of the recording process,
- determination of the tape count corresponding to the end of the video signal section, and
- common recording of the tape counts of start and end of the video signal section together with the title of the video signal section at the start of the tape,
characterized in that during the performance of the recording process, the tape count corresponding to the start of the video signal section together with the title of the video signal section is recorded by means of pulse width modulation of the control track pulses on the control track of the magnetic video tape.

2. Method according to Claim 1, comprising a common recording of the tape counts of start and end of the video signal section together with the title of the video signal section at the start of the tape on the helical video tracks.

3. Method according to Claim 1, comprising a common recording of the tape counts of start and end of the video signal section together with the title of the video signal section at the start of the tape on the control track.

4. Method according to one or more of Claims 1-3, comprising a recording of the tape count corresponding to the start of the video signal section together with the title of the video signal section and together with the tape counts corresponding to the starts of all previous video signal sections and their titles on the control track of the magnetic video tape by means of pulse width modulation of the control track pulses.

5. Method for reproducing the list of contents of a magnetic video tape cassette which has been recorded in accordance with the method according to one or more of Claims 1-4, comprising the following method steps:
- performance of an initialization run for determining the current tape position,
- at a tape position corresponding to the start of the tape, reproduction and temporary storage of the list of contents recorded at the start of the tape, and
- displaying the temporarily stored list of contents in plain text on a display,
characterized in that in the case of a tape position not corresponding to the start of the tape, the list of contents recorded on the control track is reproduced and temporarily stored.

6. Video recorder for carrying out the method according to one or more of Claims 1-4, comprising
- a first pulse transmitter (13) for delivering pulses from a first shaft connected to the tape drive,
- a second pulse transmitter (14) for delivering pulses from a second shaft connected to the tape drive,
- a computing circuit (4) for determining the current tape position, using the pulses delivered by the two pulse transmitters,
- storage means (5, 7) for temporarily storing the current tape count and the title of the video signal section to be recorded,
- a magnetic control track head (15) for recording pulse-width-modulated control track pulses,
- a tape counter (17), and
- a control circuit (4) which, after the end of the recording of the video signal section, triggers a rewinding process and initiates common recording of the tape counts of start and end of the video signal section together with the title of the video signal section at the start of the tape,
characterized in that during the recording, the control pulses recorded on the control track by means of the magnetic control track head (15) are pulse-width-modulated as determined by the content of the storage means (5, 7).

7. Video recorder according to Claim 6, comprising an operating unit (FB, 2) for manually inputting the title of a video signal section to be recorded.

8. Video recorder according to Claim 6 or 7, comprising a circuit (11) for separating the data identifying the title of a video signal section to be recorded from a teletext page supplied by the television transmitter.

9. Video recorder according to one or more of Claims 6-8, comprising
- further storage means (6) for storing the lists of contents of a multiplicity of magnetic video tape cassettes.

10. Video recorder for carrying out the method according to Claim 5, comprising
- a first pulse transmitter (13) for delivering pulses from a first shaft connected to the tape drive,
- a second pulse transmitter (14) for delivering pulses from a second shaft connected to the tape drive,
- a computing circuit (4) for determining the current tape position, using the pulses delivered by the two pulse transmitters,
- a control circuit (4) which initiates the reproduction of the list of contents recorded at the start of the tape when the tape position determined is the start of the tape,
- a first storage unit (7) for temporarily storing the reproduced list of contents, and
- a text generator (12), at the output of which the list of contents to be displayed is made available,
characterized in that the control circuit (4) initiates the reproduction of the list of contents recorded on the control track when the tape position determined is not the start of the tape.

11. Video recorder according to Claim 10, comprising
- a second storage unit (6) for storing the list of contents of a multiplicity of magnetic video tape cassettes,
- means (FB, 2, 3, 4) for identifying a magnetic video tape cassette with respect to a correlation of the magnetic video tape cassette with a particular memory area of the second storage unit (6), and
- a circuit (4) which, after completed identification of the magnetic video tape cassette, addresses the second storage unit (6) in such a manner that the list of contents associated with the cassette identified is supplied to the text generator (12).

12. Video recorder according to Claim 10 or 11, comprising
- a control circuit (4) which initiates the automatic display of the list of contents on the screen after a magnetic video tape cassette has been inserted.

13. Video recorder according to Claim 10 or 11, comprising
- a control circuit (4) which initiates the display of the list of contents on the screen (BS) and responds to a command input by means of the operating unit (FB, 2).

## Revendications

1. Procédé d'enregistrement de la table des matières d'une cassette à bande magnétique vidéo, comprenant les étapes opératoires suivantes :
- exécution d'un cycle d'initialisation pour déterminer la position instantanée de la bande,
- mémorisation intermédiaire de la position instantanée de la bande,
- mémorisation intermédiaire du titre de la section du signal vidéo devant être enregistrée,
- exécution de l'opération d'enregistrement,
- détermination de l'état de la bande qui correspond à la fin de la section du signal vidéo,
- enregistrement en commun des états de la bande du début et de la fin de la section du signal vidéo ainsi que du titre de la section du signal vidéo au début de la bande,
caractérisé en ce que lors de la mise en oeuvre de l'opération d'enregistrement, l'état de la bande, qui correspond au début de la section du signal vidéo, est enregistré, conjointement avec le titre de la section du signal vidéo, sur la piste de commande de la bande magnétique vidéo à l'aide d'une modulation de la durée des impulsions de la piste de commande.

2. Procédé selon la revendication 1 avec un enregistrement commun des états de la bande du début et de la fin de la section du signal vidéo ainsi que du titre de la section du signal vidéo au début de la bande dans les pistes vidéo obliques.

3. Procédé selon la revendication 1 avec enregistrement des états de la bande du début et de la fin de la section du signal vidéo ainsi que du titre de la section du signal vidéo au début de la bande sur la piste de commande.

4. Procédé selon une ou plusieurs des revendications 1-3 avec un enregistrement de l'état de la bande, qui correspond au début de la section du signal vidéo, conjointement avec le titre de la section du signal vidéo et conjointement avec les états de la bande qui correspondent au début de toutes les sections précédentes du signal vidéo, et leurs titres sur la piste de commande de la bande magnétique vidéo au moyen d'une modulation en durée des impulsions de la piste de commande.

5. Procédé pour reproduire la table des matières d'une cassette à bande magnétique vidéo, qui a été enregistré conformément au procédé selon une ou plusieurs des revendications 1-4, comprenant les étapes opératoires suivantes :
- exécution d'un cycle d'initialisation pour la détermination de la position instantanée de la bande,
- dans le cas d'une position de la bande qui correspond au début de la bande, reproduction et mémorisation intermédiaire de la table des matières enregistrée au début de la bande, et
- représentation de la table des matières mémorisée temporairement, en texte clair sur un dispositif d'affichage,
caractérisé en ce que dans le cas d'une position de la bande qui ne correspond pas au début de la bande, la reproduction et la mémorisation intermédiaire de la table des matières enregistrée sur la piste de commande sont exécutées.

6. Enregistreur vidéo pour la mise en oeuvre du procédé selon une ou plusieurs des revendications 1-4, comprenant
- un premier générateur d'impulsions (13) servant à délivrer des impulsions d'un premier arbre qui est relié au dispositif d'entraînement de la bande,
- un second générateur d'impulsions (14) servant à délivrer des impulsions d'un second arbre qui est relié au dispositif d'entraînement de la bande,
- un circuit de calcul (4) servant à déterminer la position instantanée de la bande moyennant l'utilisation des impulsions délivrées par les deux générateurs d'impulsions,
- des moyens de mémoire (5, 7) pour la mémorisation intermédiaire de l'état instantané de la bande et du titre de la section du signal vidéo devant être enregistrée,
- une tête magnétique (15) de la piste de commande pour l'enregistrement d'impulsions de la piste de commande modulés selon une modulation d'impulsions en durée,
- un compteur de bande (17), et
- un circuit de commande (4), qui déclenche une opération de rembobinage à la fin de l'enregistrement de la section du signal vidéo, et qui déclenche l'enregistrement commun des états de la bande du début et de la fin de la section du signal vidéo conjointement avec le titre de la section du signal vidéo au début de la bande,
caractérisé en ce que, lors de l'enregistrement, les impulsions de commande enregistrées sur la piste de commande au moyen de la tête magnétique (15) de la piste de commande sont modulées selon une modulation d'impulsions en durée en fonction du contenu des moyens de mémoire (5, 7).

7. Enregistreur vidéo selon la revendication 6, comportant une unité de commande (FB, 2) permettant l'introduction manuelle du titre d'une section du signal vidéo, devant être enregistrée.

8. Enregistreur vidéo selon la revendication 6 ou 7, comportant un circuit (11) pour séparer les données, qui caractérisent le titre, d'une section du signal vidéo devant être enregistrée, par rapport à une page de texte vidéo délivrée par l'émetteur de télévision.

9. Enregistreur vidéo selon l'une ou plusieurs des revendications 6-8, comportant
- d'autres moyens de mémoire (6) pour mémoriser la table des matières d'une multiplicité de cassettes à bandes magnétiques vidéo.

10. Enregistreur vidéo pour la mise en place du procédé selon la revendication 5, comportant
- un premier générateur d'impulsions (13) servant à délivrer des impulsions d'un premier arbre qui est relié au dispositif d'entraînement de la bande,
- un second générateur d'impulsions (14) servant à délivrer des impulsions d'un second arbre qui est relié au dispositif d'entraînement de la bande,
- un circuit de calcul (4) servant à déterminer la position instantanée de la bande moyennant l'utilisation des impulsions délivrées par les deux générateurs d'impulsions,
- un circuit de commande (4), qui, lorsque la position déterminée de la bande est le début de la bande, déclenche la reproduction de la table des matières enregistrée au début de la bande,
- une première unité de mémoire (7) pour l'enregistrement intermédiaire de la table des matières reproduite, et
- un générateur de texte (12), à la sortie duquel est disponible la table des matières devant être représentée,
caractérisé en ce que, lorsque la position déterminée de la bande n'est pas le début de la bande, le circuit de ocmmande (4) déclenche la reproduction de la table des matières enregistrée sur la piste de commande.

11. Enregistreur vidéo selon la revendication 10, comprenant
- une seconde unité de mémoire (6) pour mémoriser les tables des matières d'une multiplicité de cassettes à bande magnétique vidéo,
- des moyens (FB, 2, 3, 4) pour identifier une cassette à bande magnétique vidéo en rapport avec une association de la cassette à bande magnétique vidéo à une zone déterminée de la seconde unité de mémoire (6), et
- un circuit (4), qui, après une identification réussie de la cassette à bande magnétique vidéo, adresse la seconde unité de mémoire (6) de telle sorte que la table des matières, associée à la cassette identifiée, est envoyée au générateur de texte (12).

12. Enregistreur vidéo selon la revendication 10 ou 11, comportant
- un circuit de commande (4), qui, après l'insertion d'une cassette à bande magnétique vidéo, déclenche la représentation automatique de la table des matières sur l'écran.

13. Enregistreur vidéo selon la revendication 10 ou 11, comportant
- un circuit de commande (4), qui déclenche la représentation de la table des matières sur l'écran (BS) en fonction d'une instruction introduite au moyen de l'unité de commande (FB, 2).
